# EUROPEAN PATENT APPLICATION

(11) **EP 3 106 833 A2**
(43) Date of publication of application: **21.12.2016**
(21) Application number: 16174422.2
(22) Date of filing: 14.06.2016
(51) Int. Cl.: G01C 19/574, G01P 1/00, G01C 19/5733

(54) **INERTIAL SENSOR WITH COUPLE SPRING FOR COMMON MODE REJECTION**

(30) Priority: 17.06.2015 US 201514742452
(71) Applicant: NXP USA, Inc., Austin TX 78735 (US)
(72) Inventor: Singer, Stefan, 5656 AG Eindhoven (NL); Gerster, Jochen, 5656 AG Eindhoven (NL); Herrmann, Stephan, 5656 AG Eindhoven (NL); Neff, Albrecht, 5656 AG Eindhoven (NL)
(74) Representative: Freescale law department - EMEA patent ops

(57) **Abstract**

A MEMS device includes a two spring systems coupling a pair of movable masses. Each of the spring systems includes a constrained stiff beam and a pair of flexures, where one flexure is directly coupled to one end of the stiff beam and to one of the movable masses and the other flexure is directly coupled to the opposing end of the stiff beam and to the other movable mass. In response to drive movement of the movable masses, the flexures enable pivotal movement the constrained stiff beams such that the stiff beams pivot in opposing directions about their center hinge points. This pivotal movement enables anti-phase linear oscillatory motion of the drive masses while substantially suppressing or otherwise rejecting in-phase motion of the movable masses.

## Description

### TECHNICAL FIELD OF THE INVENTION

The present invention relates generally to microelectromechanical systems (MEMS) devices. More specifically, the present invention relates to a MEMS inertial sensor that is generally insusceptible to error resulting from in-phase motion.

### BACKGROUND OF THE INVENTION

Microelectromechanical systems (MEMS) technology has achieved wide popularity in recent years, as it provides a way to make very small mechanical structures and integrate these structures with electrical devices on a single substrate using conventional batch semiconductor processing techniques. One common application of MEMS is the design and manufacture of sensor devices. MEMS sensor devices are widely used in applications such as automotive, inertial guidance systems, household appliances, game devices, protection systems for a variety of devices, and many other industrial, scientific, and engineering systems. In particular, MEMS gyro sensors are increasingly being adapted for use in the automotive industry to facilitate antiskid control and electronic stability control in anti-rollover systems.

A MEMS gyro sensor, alternatively referred to as a "gyroscope," "angular rate sensor", "gyrometer," "gyroscope sensor," or "yaw rate sensor," is an inertial sensor that senses angular speed or velocity around one or more axes. One such sensor, referred to as an "x-axis" gyro, is configured to sense angular rotation about an axis parallel to the gyro substrate due to the influence of a Coriolis acceleration component.

Many MEMS angular rate sensors utilize vibrating structures that are suspended over a substrate. One such angular rate sensor is commonly referred to as a "tuning fork" angular rate sensor and typically has electrostatic drive and capacitive-type sensing. A tuning fork angular rate sensor can include a pair of drive masses and/or a pair of sense masses. The pair of drive masses are driven in phase opposition (i.e., anti-phase). In response to an external angular stimulus about an input axis, the one or more sense masses move by exploiting the Coriolis acceleration component. The movement of the one or more sense masses has an amplitude that is proportional to the angular rotation rate of the angular rate sensor about the input axis.

Unfortunately, such angular rate sensors are susceptible to common mode excitations of both of the drive masses and/or both of the sense masses. Common mode excitation is a condition in which two movable masses, which are supposed to move in anti-phase, instead move in the same direction and at the same amplitude due to an external stimulus (e.g., shock, vibration, spurious acceleration). The frequency of the in-phase motion (also referred to as common mode frequency) can be as low as or lower than the frequency of the anti-phase motion. Thus, common mode excitation (i.e., in-phase motion) can lead to inaccuracy of the angular rate sensor and/or can result in permanent failure of the angular rate sensor. Moreover, the potential for inaccuracy or failure of the angular rate sensor is exacerbated by the relatively low common mode frequency.

### BRIEF DESCRIPTION OF THE DRAWINGS

A more complete understanding of the present invention may be derived by referring to the detailed description and claims when considered in connection with the Figures, wherein like reference numbers refer to similar items throughout the Figures, the Figures are not necessarily drawn to scale, and:
FIG. 1 shows a top view of a microelectromechanical systems (MEMS) device in accordance with an embodiment;
FIG. 2 shows a side view of the MEMS device along section lines 2-2 in FIG. 1;
FIG. 3 shows an enlarged partial top view of the MEMS device of FIG. 1;
FIG. 4 shows a conceptual model of the MEMS device of FIG. 1 having drive masses coupled via a spring system in accordance with an embodiment;
FIG. 5 shows the conceptual model of FIG. 4 demonstrating anti-phase motion of the drive masses in a first direction; and
FIG. 6 shows the conceptual model of FIG. 4 demonstrating anti-phase motion of the drive masses in a second direction.

### DETAILED DESCRIPTION

In overview, embodiments disclosed herein entail a microelectromechanical systems (MEMS) device, such as an angular rate sensor, having a common mode rejection structure and methodology for sensing an angular stimulus about a rotational axis utilizing the angular rate sensor. The MEMS device includes a common mode rejection structure in the form of a pair of spring systems coupling a pair of movable masses. The spring systems enable a fundamental anti-phase oscillatory motion of the movable masses while increasing the common mode frequency so that in-phase motion of the movable masses is effectively rejected. A common mode frequency that is significantly greater than the frequency of the anti-phase oscillatory motion is beneficial in terms of resistance to shock, vibration, spurious acceleration, and the like that might otherwise result in inaccuracy or failure of the angular rate sensor. Although a MEMS angular rate sensor is described herein, it should be understood that the drive and sense spring systems may be adapted for use in other MEMS devices implementing dual movable masses that are to move in anti-phase, and for which in-phase motion is to be suppressed.

The instant disclosure is provided to further explain in an enabling fashion the best modes, at the time of the application, of making and using various embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

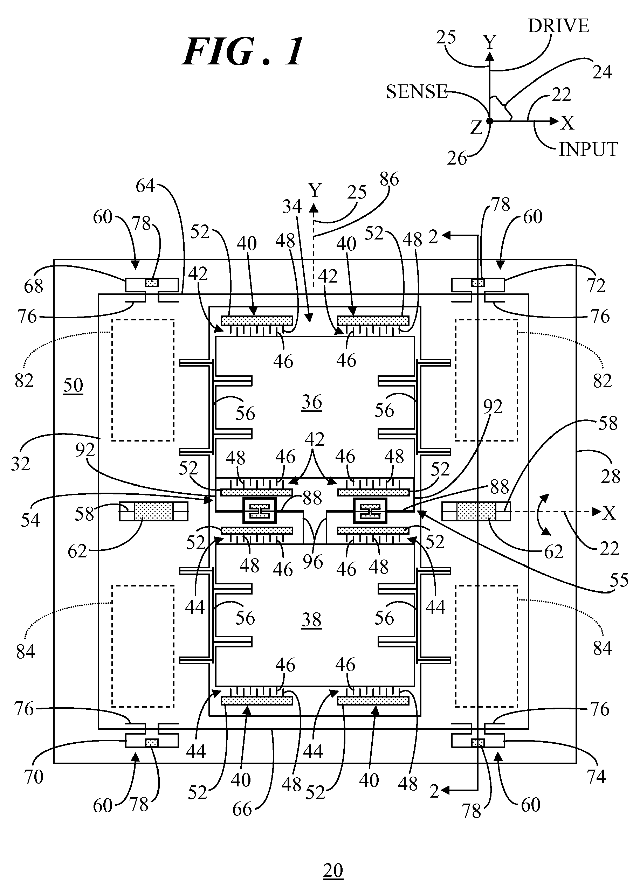

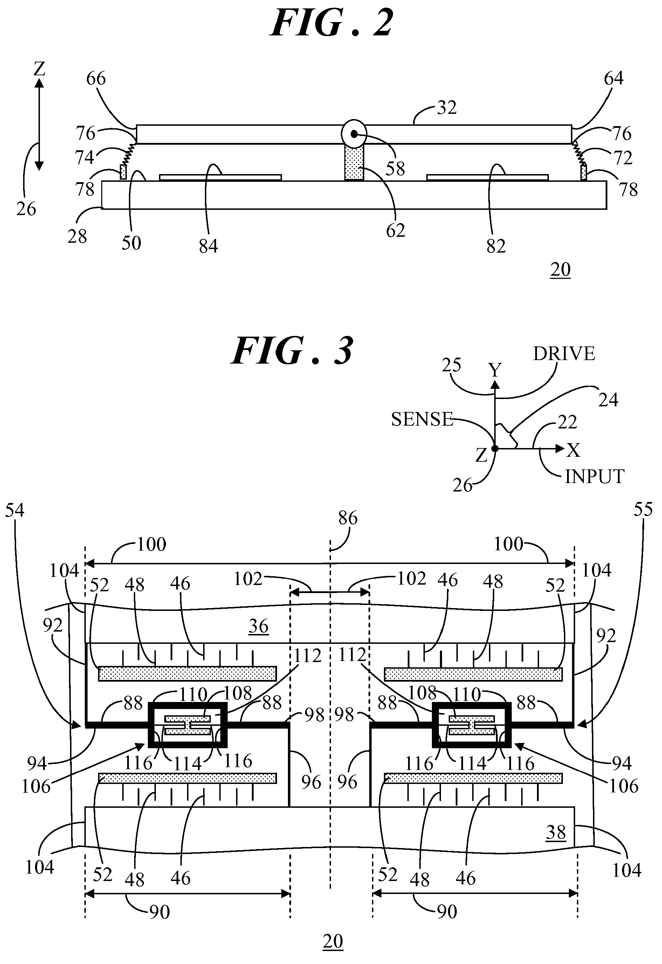

Referring to FIGs. 1-3, FIG. 1 shows a top view of microelectromechanical systems (MEMS) device 20, in accordance with an embodiment. FIG. 2 shows a side conceptual view of MEMS device 20 along section lines 2-2 in FIG. 1, and FIG. 3 shows an enlarged partial top view of MEMS device 20. MEMS device 20 is generally configured to sense angular rate about an axis of rotation 22, i.e., the X-axis in a three-dimensional coordinate system. Accordingly, MEMS device 20 is referred to herein as a gyro sensor 20. By convention, gyro sensor 20 is illustrated as having a generally planar structure within an X-Y plane 24, wherein a Y-axis 25 extends upwardly and downwardly in FIGs. 1 and 3, a Z-axis 26 extends out of the page (normal to X-Y plane 24 in FIGs. 1 and 3), and Z-axis 26 extends upwardly and downwardly in FIG. 2.

Gyro sensor 20 includes a planar substrate 28, a drive mass system, a sense mass 32, and various mechanical linkages, which will be described in detail below. In the specific embodiment of FIGs. 1-2, the drive mass system resides in a central opening 34 extending through the frame structure of sense mass 32. The drive mass system includes a pair of movable masses, referred to herein as a first drive mass 36 and a second drive mass 38. Second drive mass 38 is disposed laterally in X-Y plane 24 relative to first drive mass 36, and first and second drive masses 36, 38 are situated symmetrically relative to one another about axis of rotation 22.

A drive system 40 resides in central opening 34 and operably communicates with each of first and second drive masses 36, 38. More specifically, drive system 40 includes a set of drive elements 42 configured to oscillate first drive mass 36 and another set of drive elements 44 configured to oscillate second drive mass 38. Each set of drive elements 42 and 44 includes pairs of electrodes, referred to as comb fingers 46 and 48. In an embodiment, comb fingers 46 are coupled to and extend from a perimeter of each of first and second drive masses 36 and 38. Comb fingers 48 are fixed to a surface 50 of substrate 28 via anchors 52. Comb fingers 48 are spaced apart from and positioned in alternating arrangement with comb fingers 46. By virtue of their attachment to drive mass structures 36 and 38, comb fingers 46 are movable together with drive mass structures 36, 38. Conversely, due to their fixed attachment to substrate 28, comb fingers 48 are stationary relative to comb fingers 46. Accordingly, comb fingers 46 are referred to herein as movable fingers 46, and comb fingers 48 are referred to herein as fixed fingers 48. Only a few movable and fixed fingers 46, 48 are shown for clarity of illustration. Those skilled in the art should readily recognize that the quantity and structure of the comb fingers will vary in accordance with design requirements. An entire length of fixed fingers 48 may be attached to surface 50 of substrate 28 in some embodiments. In alternative embodiments, each of fixed fingers 48 may be anchored to surface 50 of substrate 28 at a single location as represented by anchors 52 with the remaining portion of each of fixed fingers 48 being suspended above surface 28. This second approach can be desirable in some embodiments to achieve greater efficiencies in usage area and to reduce susceptibility to package stress.

For consistency throughout the description of the following figures, any anchoring structures, such as anchors 52, that connect an element of gyro sensor 20 to the underlying surface 50 of substrate 28 is illustrated with a stippled pattern. Conversely, any elements that are not anchoring structures do not include this stippled pattern and are therefore suspended above surface 50 of substrate 28.

First and second drive masses 36 and 38 are configured to undergo oscillatory motion within X-Y plane 24. In general, an alternating current (AC) voltage may be applied to fixed fingers 48 via a drive circuit (not shown) to cause first and second drive masses 36, 38 to linearly oscillate in a direction of motion substantially parallel to Y-axis 25. In an embodiment, the AC voltage is suitably applied to fixed fingers 48 to cause movable fingers 46 (and thus first and second drive masses 36, 38) to move generally parallel to fixed fingers 48. As will be discussed in considerable detail below, first and second drive masses 36, 38 are suitably linked together via a common mode rejection structure in the form of a pair of coupling springs, referred to herein as first spring system 54 and a second spring system 55. The common mode rejection structure of first and second spring systems 54, 55 is configured to enable movement of masses 36, 38 in opposite directions, i.e., anti-phase, along Y-axis 25, while rejecting in-phase (common mode) motion along Y-axis 25.

Link spring components 56 couple each of first and second drive masses 36, 38 to sense mass 32. As such, first and second drive masses 36 and 38 are suspended above surface 50 of substrate 28. Link spring components 56 may be any convenient shape, size, and material that allow a large oscillatory linear motion of drive mass structures 36 and 38 in plane 24 along Y-axis 54 yet are rigid enough to transfer the Coriolis force from first and second drive masses 36, 38 to sense mass 32 along Z-axis 26.

Gyro sensor 20 further includes on-axis torsion springs 58 and an off-axis spring system 60. On-axis torsion springs 58 are coupled to sense mass 32 and are co-located with X-axis of rotation 22. In the illustrated embodiment, each of on-axis torsion springs 58 connects sense mass 32 to surface 50 of substrate 28 via anchors 62, which are also co-located with X-axis of rotation 22.

Sense mass 32 includes outer ends 64 and 66 symmetrically located on opposing sides of X-axis of rotation 22. That is, the frame structure of sense mass 32 is centered at X-axis of rotation 22 so that outer ends 64 and 66 are equidistant from X-axis of rotation 22. In the illustrated embodiment, off-axis spring system 60 includes off-axis springs 68, 70, 72, and 74. Off-axis springs 68 and 72 are disposed at outer end 64 of sense mass 32, and off-axis springs 70 and 74 are disposed at outer end 66 of sense mass 32. In particular, each of off-axis springs 68, 70, 72, and 74 has a connection interface 76 that is directly physically coupled to sense mass 32 at locations that are displaced away from X-axis of rotation 22. In the illustrated embodiment, each of springs 68, 70, 72, 74 connects sense mass 32 to surface 50 of substrate 28 via anchors 78. Thus, springs 68, 70, 72, and 74 are generally linear springs, each of which has connection interface 76 coupled to sense mass 32 and an opposing end coupled to one of anchors 78, that restrict the out-of-plane motion of sense mass 32 so that it rotates about X-axis of rotation 22.

In general, the rotational stiffness of sense mass 32 incurred through the implementation of springs 54, 55, 58, 68, 70, 72, and 74 is a function of the Z-axis spring constant (i.e., the spring constant of each of linear springs 68, 70, 72, and 74, as well as the spring constants of first and second spring systems 54, 55, and on-axis torsion springs 58). However, due to their design, the rotational stiffness of sense mass 32 resulting from the presence of first and second spring systems 54, 55 is significantly less than that of springs 58, 68, 70, 72, 74. Therefore, the spring constants of first and second spring systems 54, 55 can be neglected when determining the rotational stiffness of sense mass 32.

The rotational stiffness of sense mass 32 is additionally a function of the distance between springs 68, 72 at end 64 and springs 70, 74 at end 66 of sense mass 32. The effective pivot point for springs 68, 70, 72, and 74 is midway if the springs have the same spring constant. That is, the symmetrical placement of springs 68, 70, 72, and 74 results in the effective pivot point of sense mass 32 coinciding with X-axis of rotation 22 and on-axis torsion springs 58. The shape, size, quantity, locations, material, and spring constants of on-axis torsion springs 58 and springs 68, 70, 72, and 74 of off-axis spring system 60 can be suitably selected in accordance with known mechanical design principles to achieve the desired stiffness for frequency matching, stability, and sensing range.

Substrate 28 can include a semiconductor layer (not shown) that is covered by one or more insulation layers (not shown). The semiconductor layer is typically a silicon wafer upon which electronics associated with gyro sensor 20 may, in some cases, also be fabricated using conventional manufacturing technologies. The insulating layer may include glass, silicon dioxide, silicon nitride, or any other compatible material. A variety of conductive plates, or electrodes, are formed on surface 50 of substrate 28 in conjunction with the other fixed components of gyro sensor 20.

In the simplified embodiment, the electrodes include X-sensing electrodes 82 and 84. Conductors (not shown) can be formed on substrate 28 to provide separate electrical connections to electrodes 82 and 84 and to sense mass 32. Electrodes 82 and 84 are formed from a conductive material such as polysilicon, and can be formed at the same time as the respective conductors if the same materials are chosen for such components. Electrodes 82 and 84 are visible in FIG. 2, but are obscured in FIG. 1 by the overlying sense mass 32. Accordingly, in FIG. 1, electrodes 82 and 84 are represented in dashed line form to illustrate their physical placement relative to sense mass 32. Although only X-sensing electrodes 82 and 84 are shown, those skilled in the art will recognize that in alternative embodiments, additional electrode types may be provided for frequency tuning, force feedback, and/or quadrature compensation.

With particular reference to FIGs. 1 and 3, first and second spring systems 54, 55 coupling first drive mass 36 to second drive mass 38 are disposed on opposing sides of an axis of mirror symmetry 86 of gyro sensor 20. An axis of mirror symmetry is one in which if a shape were to be folded in half at the axis, the two halves of the shape would be identical, i.e., the two halves are each other's mirror images. In the configuration of gyro sensor 20, axis of mirror symmetry 86 is a center axis of gyro sensor 20 and is parallel to Y-axis 25. Since first and second drive masses 36, 38 move substantially parallel to Y-axis, axis of mirror symmetry 86 is therefore oriented substantially parallel to the direction of motion of first and second drive masses 36, 38.

Each of first and second spring systems 54, 55 includes a stiff beam 88 having a lengthwise dimension 90 that is oriented transverse to the direction of motion of first and second drive masses 36, 38, i.e., transverse to Y-axis 25. Lengthwise dimension 90 of each stiff beam 88 is longitudinally aligned with on-axis torsion springs 58. Thus, stiff beams 88 are positioned at axis of rotation 22, and therefore they are not disposed on opposing sides of axis of rotation 22, i.e., the X-axis.

A first flexure 92 is directly coupled to a first end 94 of stiff beam 88. First flexure 92 is also directly coupled to first drive mass 36. A second flexure 96 is directly coupled to a second end 98 of stiff beam 88. Second flexure 96 is also directly coupled to second drive mass 38. Each of first and second flexures 92, 96 is oriented generally transverse to stiff beam 88. The phrase "directly coupled" is defined as a coupling between two elements in which there are no flexures, stiff beams, or any other structures interposed between the two elements that are "directly coupled."

As mentioned above, first and second spring systems 54, 55 are disposed on opposing sides of axis of mirror symmetry 86. Accordingly, first flexure 92 of each of spring systems 54, 55 is coupled to first drive mass 36 at a first distance 100 displaced away from axis of mirror symmetry 86. Likewise, second flexure 98 of each of spring systems 54, 55 is coupled to second drive mass 38 at a second distance 102 displaced away from axis of mirror symmetry 86. In accordance with the illustrated configuration, second distance 102 is less than first distance 100. As such, each of first flexures 92 is coupled to the perimeter of first drive mass 36 at an outer edge 104 of first drive mass 36. Conversely, each of second flexures 94 is coupled to the perimeter of second drive mass 38 at a location significantly closer to axis of mirror symmetry 86, where the location also does not interfere with the placement of movable and fixed fingers 46 and 48.

In an embodiment, a central region 106 of stiff beam 88 of each of first and second spring systems 54, 55 is elastically coupled to surface 50 of substrate 28 via an anchor element 108. More particularly, stiff beam 88 of each of first and second spring systems 54, 55 includes a frame structure 110 that is centrally located along a length of stiff beam 88. Anchor element 108 is coupled to surface 50 of substrate 28 and resides in a central opening 112 of frame structure 110. Each of first and second spring systems 54, 55 further includes elastic members 114 interconnected between anchor element 106 and an inner perimeter 116 of frame structure 110. The interconnection of stiff beam 88 with first and second flexures 92, 96 along with stiff beam 88 being elastically coupled to surface 50 of substrate 28 via elastic members 114 and anchor element 108 enables stiff beam 88 to pivot in X-Y plane 24. In operation, the drive system (which includes movable fingers 46 and fixed fingers 48) imparts oscillatory linear motion on first and second drive masses 36, 38 due to electrostatic force. The movement of first and second drive masses 36, 38 causes deformation/bending of first and second flexures 92, 92 and elastic members 114, and pivoting motion of stiff beam 88 of each of first and second spring systems 54, 55. The pivoting motion of stiff beam 88 is about a hinge point/constraint at central region 106 that is substantially perpendicular to X-Y plane 24. Moreover, stiff beam 88 of second spring system 55 pivots in a direction that is opposite from the pivoting motion of stiff beam 88 of first spring system 54. Thus, the configuration two springs system 54, 55 each of which includes first and second flexures 92, 92 and elastic members 114 combined with stiff beam 88, results in a substantially linear oscillation of first and second drive masses 36, 38 in opposite directions (anti-phase) approximately parallel to Y-axis 25 (i.e., up and down in FIGs. 1 and 3).

However, common mode excitation (e.g., shock, vibration, etc.), which would typically tend to move first and second drive masses 36, 38 by the same amount and in the same direction along the drive axis, e.g., Y-axis 25, is counteracted by the constraint of stiff beam 88 of each of first and second spring systems 54, 55 to substrate 28. Accordingly, common mode excitation (i.e., in-phase motion) of first and second drive masses 36, 40 at the drive frequency is largely rejected.

During operation of a "tuning fork" type of angular rate sensor, the displacement of the drive masses (e.g., drive masses 36, 38) is typically much larger than the displacement of the sense mass or masses (e.g., sense mass 32). Due to this relatively large displacement, nonlinearity of drive spring motion can cause linearity error. In addition to rejecting common mode excitation, the configuration of first and second spring systems 54, 55 yields linear oscillatory behavior of first and second drive masses 36, 28 thereby mitigating the problems associated with nonlinear drive spring motion observed in prior art configurations.

As mentioned previously, wherein the axis of rotation is designated as X-axis 22, drive mass structures 36 and 38 linearly oscillate in opposite directions substantially parallel to Y-axis 25 (i.e., up and down in FIGs. 1 and 3). As a result of a Coriolis acceleration component, on-axis torsion springs 58 and springs 68, 70, 72, 74 that make up off-axis spring system 60 enable sense mass 32 to oscillate out of X-Y plane 24, along Z-axis 26 as a function of angular rate, i.e., the angular velocity, of gyro sensor 20 about X-axis of rotation 22.

Link spring components 56 couple sense mass 32 to first and second drive masses 36, 38 such that sense mass 32 is substantially decoupled from drive mass 30 with respect to the oscillatory linear motion of drive mass 30, but is coupled to first and second drive masses 36, 38 with respect to the oscillatory motion out of X-Y plane 24 of sense mass 32. In other words, the linkage established via link spring components 56 is configured such that sense mass 32 is relatively unaffected by the linear movement of first and second drive masses 36, 38 along Y-axis 25. However, sense mass 32 is linked to first and second drive masses 36, 38 so that both sense mass 32 and first and second drive masses 36, 38 jointly undergo out-of-plane motion due to the Coriolis forces during rotation of gyro sensor 20 about X-axis of rotation 22. Furthermore, due to their design, first and second spring systems 54, 55 also follow the rotation of sense mass 32 and first and second drive masses 36, 38 about X-axis of rotation 22. As sense mass 32 undergoes the oscillatory out-of-plane motion, the position change is sensed as changes in capacitance by electrodes 82, 84. This change in capacitance is sensed at electrodes 82, 84 and is processed electronically in the conventional manner to determine the magnitude of the angular stimulus (i.e., the angular rate) of gyro sensor 20 about X-axis of rotation 22.

It is the coupling between the drive motion of first and second drive masses 36, 38 along Y-axis 25 and the angular rate of gyro sensor 20 about X-axis of rotation 22 that produces the Coriolis force, which, in turn, displaces sense mass 32 out of plane 24 along Z-axis 26. The Coriolis force is very small in magnitude. In accordance with an embodiment, the resonance of gyro sensor 20 can be exploited in order to boost the output signal (i.e., the capacitances sensed at electrodes 82, 84). That is, the frequency of oscillation of sense mass 32 is sufficiently close to the frequency of oscillation of first and second drive masses 36, 38 of drive mass system 30, due at least in part to the coupling of drive masses 36, 38 via spring systems 54, 55 and due to the presence of link spring components 56, for optimal energy transfer from first and second drive masses 36, 38 to sense mass 32.

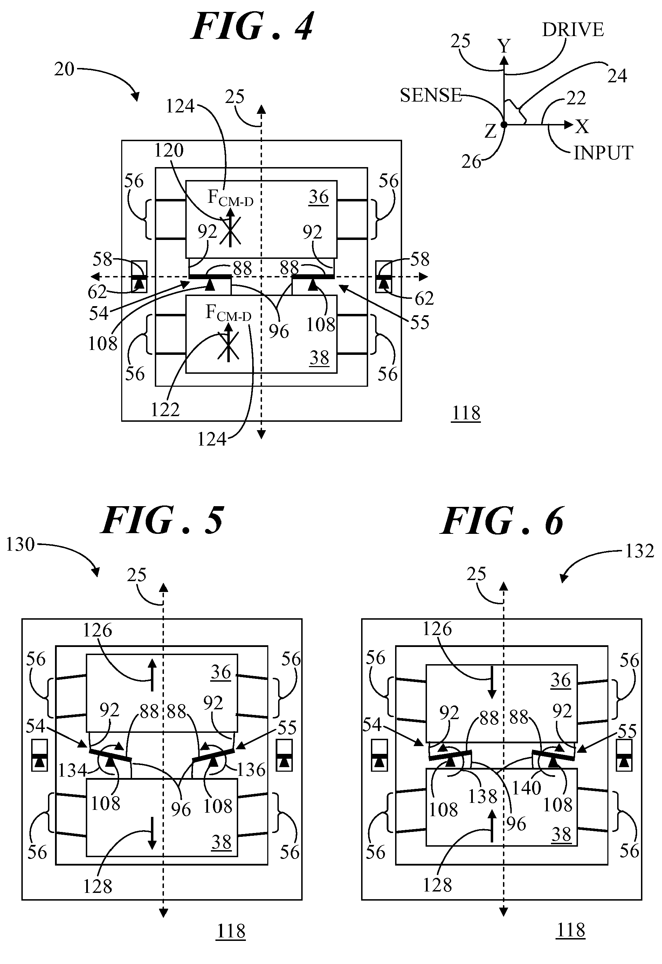

FIG. 4 shows a conceptual model 118 of gyro sensor 20 having first and second drive masses 36, 38 coupled via first and second spring systems 54, 55 in accordance with an embodiment. In conceptual model 118, anchor elements 108 of spring systems 54, 55 are represented by triangles. Similarly, anchors 62 for on-axis torsion springs 58 are also represented by triangles. Link spring components 56 are represented by simple lines interconnecting first and second drive masses 36, 38 with sense mass 32. However, off-axis springs 68, 70, 72, 74 (FIG. 1) and their associated anchors 78 (FIG. 1) are not shown in conceptual model 118 for simplicity of illustration.

The stiffness of beams 88 of spring systems 54, 55 provide mechanical constraint to in-phase drive motion (parallel to Y-axis 25), represented by two commonly directed arrows 120, 122 at the resonant operating frequency, i.e., a fundamental drive frequency. Thus, in-phase motion 120, 122 of first and second drive masses 36, 38 due to external vibration, shock, spurious acceleration, or interference at the drive frequency is largely prevented. That is, the mechanical constraint of first and second spring systems 54, 55 can push an in-phase frequency component, referred to herein as a common mode drive frequency 124 and labeled F_{CM-S}, due to in-phase motion 120, 122 sufficiently high so that common mode drive frequency 124 is outside of the operating range of gyro sensor 20. Accordingly, common mode excitation is effectively suppressed or otherwise rejected in the drive direction parallel to Y-axis 25.

Referring to FIGs. 5 and 6, FIG. 5 shows conceptual model 118 demonstrating anti-phase linear oscillatory drive motion 126, 128 of first and second drive masses 36, 38 in a first direction 130, and FIG. 6 shows conceptual model 118 demonstrating anti-phase linear oscillatory motion 126, 128 of first and second drive masses 36, 38 in a second direction 132. First and second drive masses 36, 38 are actuated to undergo anti-phase linear oscillatory drive motion 126, 128. Sense mass 32 undergoes out-of-plane motion due to the Coriolis forces during rotation of gyro sensor 20 about X-axis of rotation 22, as discussed extensively above. The out-of-plane oscillatory motion of sense mass 32 in response to an angular stimulus about X-axis of rotation 22 is sensed via electrodes 82, 84, and a magnitude of the angular stimulus is determined in response to the sensed out-of-plane oscillatory motion of sense mass 32.

In FIG. 5, anti-phase linear oscillatory drive motion 126, 128 moves first and second drive masses 36, 38 in first direction 130 away from one another. As first and second drive masses 36, 38 move away from one another, flexures 92, 96 and elastic members 114 enable rotational movement of each of stiff beams 88 in opposing directions, as represented by arrows 134, 136. In FIG. 6, anti-phase linear oscillatory drive motion 126, 128 moves first and second drive masses 36, 38 in second direction 132 toward one another. Again, flexures 92, 96 and elastic members 114 enable rotational movement of each of stiff beams 88 in opposing directions, as represented by arrows 138, 140 as first and second drive masses 36, 38 move toward one another.

Thus, anti-phase linear oscillatory drive motion 126, 128 is enabled, while in-phase (i.e., common mode) motion 120, 122 (FIG. 4) is substantially prevented. That is, stiff beam 88 of each of first and second spring systems 54, 55 is enabled to pivot about its center hinge point in response to anti-phase linear oscillatory drive motion 126, 128. Additionally, stiff beam 88 of each of first and second spring systems 54, 55 is constrained to a non-pivoting configuration when subjected to common mode excitation (e.g., an external shock, vibration, or other acceleration) due to the non-compliance of flexures 92, 96 and elastic members 114 in the drive direction substantially parallel to Y-axis 25.

Embodiments of the present invention entail a microelectromechanical systems (MEMS) device, such as a gyro sensor, having a common mode rejection structure and methodology for sensing an angular stimulus about a rotational axis utilizing the gyro sensor. An embodiment of a MEMS device includes a substrate, first and second movable masses suspended above a surface of the substrate, and first and second spring systems for coupling the first movable mass to the second movable mass. The first and second spring systems are disposed on opposing sides of an axis of mirror symmetry of the MEMS device, where the axis of mirror symmetry is oriented substantially parallel to a direction of motion of the first and second movable masses. Each of the first and second spring systems includes a stiff beam having a lengthwise dimension oriented transverse to the direction of motion of the first and second movable masses, a first flexure directly coupled to a first end of the stiff beam and directly coupled to the first movable mass, and a second flexure directly coupled to a second end of the stiff beam and directly coupled to the second drive mass.

According to an example, a central region of the stiff beam is elastically coupled to the surface of the substrate via an anchor element. The stiff beam is enabled to pivot in a plane substantially parallel to the surface of the substrate.

According to an example, the central region of the stiff beam comprises a frame structure. The anchor element resides in a central opening of the frame structure. Each of the first and second spring systems further comprises at least one elastic member interconnected between the anchor element and an inner perimeter of the frame structure.

According to an example, the MEMS device further comprises a movable frame having a central opening in which the first and second movable masses reside; an anchorage coupled to the surface of the substrate; and a torsion beam interconnected between the movable frame and the anchorage. The torsion beam enabling rotational movement of the movable frame about a second axis that is perpendicular to the axis of mirror symmetry and substantially parallel to the surface of the substrate.

According to an example, the torsion beam and the stiff beam of the each of the first and second spring systems are longitudinally aligned with one another along the second axis.

According to an example, the first and second flexures are oriented transverse to the stiff beam.

According to an example, the first and second spring systems are configured to enable the first and second movable masses to linearly oscillate in phase opposition relative to one another.

According to an example, the first flexure of each of the first and second spring systems is coupled to the first drive mass at a first distance displaced away from the axis of mirror symmetry. The second flexure of the each of the first and second spring systems is coupled to the second drive mass at a second distance displaced away from the axis of mirror symmetry. The second distance being less than the first distance.

According to an example, the direction of motion is a first direction of motion. The MEMS device further comprises a movable frame having a central opening, in which the first and second movable masses reside, a first link spring component coupling the first movable mass with the movable frame, and a second link spring component coupling the second movable mass with the movable frame. The movable frame is configured for out-of-plane oscillatory motion in a second direction that is orthogonal to the surface of the substrate.

According to an example, the movable frame moves in the second direction in response to an angular stimulus about a second axis that is substantially perpendicular to the axis of mirror symmetry and substantially parallel to the surface of the substrate.

According to an example, a microelectromechanical systems (MEMS) angular rate sensor is provided, which comprises a substrate, first and second drive masses suspended above a surface of the substrate, and first and second spring systems for coupling the first drive mass to the second drive mass. The first and second spring systems are disposed on opposing sides of an axis of mirror symmetry of the MEMS device. The axis of mirror symmetry is oriented substantially parallel to a direction of linear oscillatory drive motion of the first and second drive masses. Each of the first and second spring systems comprises a stiff beam, a first flexure and a second flexure. The stiff beam has a lengthwise dimension oriented transverse to the direction of motion of the first and second movable masses. A central region of the stiff beam is elastically coupled to the surface of the substrate via an anchor element. The stiff beam being enabled to pivot in a plane substantially parallel to the surface of the substrate in response to the linear oscillatory drive motion. The first flexure directly is coupled to a first end of the stiff beam and directly coupled to the first drive mass. The first flexure being coupled to the first drive mass at a first distance displaced away from the axis of mirror symmetry. The second flexure directly coupled to a second end of the stiff beam and directly coupled to the second drive mass. The second flexure being coupled to the second drive mass at a second distance displaced away from the axis of mirror symmetry. The second distance being less than the first distance.

According to an example, the central region of the stiff beam comprises a frame structure. The anchor element resides in a central opening of the frame structure. Each of the first and second spring systems further comprises at least one elastic member interconnected between the anchor element and an inner perimeter of the frame structure. According to an example, the first and second flexures are oriented transverse to the stiff beam.

According to an example, the MEMS device further comprises a sense frame having a central opening in which the first and second drive masses reside, an anchorage coupled to the surface of the substrate, and a torsion beam interconnected between the sense frame and the anchorage. The torsion beam enabling rotational movement of the sense frame about a second axis that is perpendicular to the axis of mirror symmetry and substantially parallel to the surface of the substrate.

According to an example, the MEMS device further comprises a first link spring component coupling the first drive mass with the sense frame, and a second link spring component coupling the second drive mass with the sense frame.

According to an example, the sense frame moves in response to an angular stimulus about the second axis.

An embodiment of a method for sensing an angular stimulus about a rotational axis includes providing an angular rate sensor having first and second drive masses and a sense frame having a central opening in which the first and second drive masses reside, the first and second drive masses being coupled to one another via first and second spring systems, the sense frame being coupled to the first and second drive masses via a link spring system, the first and second spring systems being disposed on opposing sides of an axis of mirror symmetry of the angular rate sensor, the axis of mirror symmetry being oriented substantially parallel to a direction of motion of the first and second drive masses, wherein each of the first and second spring systems comprise a stiff beam having a lengthwise dimension oriented transverse to the direction of motion of the first and second drive masses, a first flexure directly coupled to a first end of the stiff beam and directly coupled to the first movable mass, and a second flexure directly coupled to a second end of the stiff beam and directly coupled to the second drive mass. The method further includes actuating the first and second drive masses to undergo anti-phase linear oscillatory motion at a drive frequency, the anti-phase linear oscillatory motion being substantially parallel to a surface of a substrate over which the first and second drive masses are suspended, sensing out-of-plane oscillatory motion of the sense frame in response to the angular stimulus, and determining a magnitude of the angular stimulus about the rotational axis in response to the sensed out-of-plane oscillatory motion of the sense frame.

According to an example, the first and second spring systems are configured to constrain the first and second drive masses to the anti-phase linear oscillatory motion at the drive frequency.

According to an example, a central region of the stiff beam of the each of the first and second spring systems is elastically coupled to the surface of the substrate via an anchor element. The stiff beam being enabled to pivot in a plane substantially parallel to the surface of the substrate in response to the anti-phase linear oscillatory motion of the first and second drive masses.

According to an example, the first and second drive masses undergo the anti-phase linear oscillatory motion substantially parallel to the axis of mirror symmetry. The rotational axis is substantially perpendicular to the axis of mirror symmetry and substantially parallel to the surface of the substrate. The sense frame undergoes the out-of-plane oscillatory motion along an axis that is orthogonal to the axis of mirror symmetry and the rotational axis.

The MEMS device having a pair of spring systems coupling a pair of movable masses enables a fundamental anti-phase oscillatory motion of the movable masses while increasing the common mode frequency so that in-phase motion of the movable masses is effectively rejected. A common mode frequency that is significantly greater than the frequency of the anti-phase oscillatory motion is beneficial in terms of resistance to shock, vibration, spurious acceleration, and the like that might otherwise result in inaccuracy or failure of the angular rate sensor.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. A microelectromechanical systems (MEMS) device comprising:
a substrate (28);
first and second movable masses (36, 38) suspended above a surface of said substrate; and
first and second spring systems (54, 55) for coupling said first movable mass to said second movable mass, said first and second spring systems being disposed on opposing sides of an axis of mirror symmetry of said MEMS device, said axis of mirror symmetry being oriented substantially parallel to a direction of motion of said first and second movable masses, wherein each of said first and second spring systems comprises:
a stiff beam (88) having a lengthwise dimension oriented transverse to said direction of motion of said first and second movable masses;
a first flexure (92) directly coupled to a first end of said stiff beam and directly coupled to said first movable mass; and
a second flexure (98) directly coupled to a second end of said stiff beam and directly coupled to said second drive mass.

2. The MEMS device of claim 1, wherein a central region of said stiff beam is elastically coupled to said surface of said substrate via an anchor element (108), said stiff beam being enabled to pivot in a plane substantially parallel to said surface of said substrate.

3. The MEMS device of claim 2, wherein said central region of said stiff beam comprises a frame structure (110), said anchor element resides in a central opening (112) of said frame structure, and said each of said first and second spring systems further comprises at least one elastic member (114) interconnected between said anchor element and an inner perimeter (116) of said frame structure.

4. The MEMS device of any preceding claim, further comprising:
a movable frame (110) having a central opening (112) in which said first and second movable masses reside;
an anchorage (106) coupled to said surface of said substrate; and
a torsion beam (58) interconnected between said movable frame and said anchorage, said torsion beam enabling rotational movement of said movable frame about a second axis that is perpendicular to said axis of mirror symmetry and substantially parallel to said surface of said substrate.

5. The MEMS device of any preceding claim, wherein said first and second flexures are oriented transverse to said stiff beam.

6. The MEMS device of any preceding claim, wherein said first and second spring systems are configured to enable said first and second movable masses to linearly oscillate in phase opposition relative to one another.

7. The MEMS device of any preceding claim, wherein:
said first flexure of each of said first and second spring systems is coupled to said first drive mass at a first distance displaced away from said axis of mirror symmetry; and
said second flexure of said each of said first and second spring systems is coupled to said second drive mass at a second distance displaced away from said axis of mirror symmetry, said second distance being less than said first distance.

8. The MEMS device of any preceding claim, wherein said direction of motion is a first direction of motion, and said MEMS device further comprises:
a movable frame having a central opening in which said first and second movable masses reside;
a first link spring component coupling said first movable mass with said movable frame; and
a second link spring component coupling said second movable mass with said movable frame, wherein said movable frame is configured for out-of-plane oscillatory motion in a second direction that is orthogonal to said surface of said substrate.

9. The MEMS device of claim 9, wherein said movable frame moves in said second direction in response to an angular stimulus about a second axis that is substantially perpendicular to said axis of mirror symmetry and substantially parallel to said surface of said substrate.

10. A microelectromechanical systems (MEMS) angular rate sensor comprising:
a substrate (28);
first and second drive masses (36, 38) suspended above a surface of said substrate; and
first and second spring systems (54, 55) for coupling said first drive mass to said second drive mass, said first and second spring systems being disposed on opposing sides of an axis of mirror symmetry of said MEMS device, said axis of mirror symmetry being oriented substantially parallel to a direction of linear oscillatory drive motion of said first and second drive masses, wherein each of said first and second spring systems comprises:
a stiff beam (88) having a lengthwise dimension oriented transverse to said direction of motion of said first and second movable masses, wherein a central region of said stiff beam is elastically coupled to said surface of said substrate via an anchor element (108), said stiff beam being enabled to pivot in a plane substantially parallel to said surface of said substrate in response to said linear oscillatory drive motion;
a first flexure (92) directly coupled to a first end of said stiff beam and directly coupled to said first drive mass, said first flexure being coupled to said first drive mass at a first distance displaced away from said axis of mirror symmetry; and
a second flexure (98) directly coupled to a second end of said stiff beam and directly coupled to said second drive mass, said second flexure being coupled to said second drive mass at a second distance displaced away from said axis of mirror symmetry, said second distance being less than said first distance.

11. The MEMS device of claim 10, wherein said central region of said stiff beam comprises a frame structure (110), said anchor element resides in a central opening (112) of said frame structure, and said each of said first and second spring systems further comprises at least one elastic member (114) interconnected between said anchor element and an inner perimeter (116) of said frame structure.

12. The MEMS device of claim 10 or claim 11, wherein said first and second flexures are oriented transverse to said stiff beam.

13. The MEMS device of any one of the claims 10 to 12, further comprising:
a sense frame having a central opening in which said first and second drive masses reside;
an anchorage coupled to said surface of said substrate; and
a torsion beam interconnected between said sense frame and said anchorage, said torsion beam enabling rotational movement of said sense frame about a second axis that is perpendicular to said axis of mirror symmetry and substantially parallel to said surface of said substrate.

14. The MEMS device of claim 13, further comprising:
a first link spring component coupling said first drive mass with said sense frame; and
a second link spring component coupling said second drive mass with said sense frame.

15. A method for sensing an angular stimulus about a rotational axis, said method comprising:
providing an angular rate sensor having first and second drive masses and a sense frame having a central opening in which said first and second drive masses reside, said first and second drive masses being coupled to one another via first and second spring systems, said sense frame being coupled to said first and second drive masses via a link spring system, said first and second spring systems being disposed on opposing sides of an axis of mirror symmetry of said angular rate sensor, said axis of mirror symmetry being oriented substantially parallel to a direction of motion of said first and second drive masses, wherein each of said first and second spring systems comprise a stiff beam having a lengthwise dimension oriented transverse to said direction of motion of said first and second drive masses, a first flexure directly coupled to a first end of said stiff beam and directly coupled to said first movable mass, and a second flexure directly coupled to a second end of said stiff beam and directly coupled to said second drive mass;
actuating said first and second drive masses to undergo anti-phase linear oscillatory motion at a drive frequency, said anti-phase linear oscillatory motion being substantially parallel to a surface of a substrate over which said first and second drive masses are suspended;
sensing out-of-plane oscillatory motion of said sense frame in response to said angular stimulus; and
determining a magnitude of said angular stimulus about said rotational axis in response to said sensed out-of-plane oscillatory motion of said sense frame.
